# DEMANDE DE BREVET EUROPEEN

(11) **EP 0 638 751 A1**
(43) Date de publication de la demande: **15.02.1995**
(21) Numéro de dépôt: 94401529.6
(22) Date de dépôt: 04.07.1994
(51) Int. Cl.: F16L 11/16, F01N 7/18

(54) **Tube flexible et étanche**

(30) Priorité: 06.08.1993 FR 9309748
(71) Demandeur: ETABLISSEMENTS POUJOULAT, F-79360 Beauvoir sur Niort (FR)
(72) Inventeur: Coirier, Yves, F-92380 Garches (FR); Murzeau, Jack, F-79000 Niort (FR)
(74) Mandataire: Phélip, Bruno

(57) **Abrégé**

Tube flexible et étanche (1) formé par enroulement en hélice d'une bande profilée (2) autour d'un axe longitudinal (A), la bande profilée comprenant une première aile (7) ondulée et une deuxième aile (8) approximativement plane, ladite deuxième aile (8) recouvrant, après enroulement, la première aile (7) à l'intérieur du tube (1). Selon l'invention, la bande profilée (2) comporte une troisième aile (9) approximativement plane située entre la première (7) et la deuxième ailes (8) et reliée à la deuxième aile (8) par un épaulement (10) formé tel que la troisième aile (9) forme, après enroulement, une hélice de diamètre plus grand que celui de la deuxième aile (8).

## Description

L'invention concerne un tube flexible et étanche formé par enroulement en hélice d'une bande profilée autour d'un axe longitudinal, les bords de la bande profilée étant fixés d'une spire à l'autre.

Des tubes flexibles de ce genre ont généralement une paroi ondulée et servent par exemple comme conduit de cheminée ou pour former des canalisations de ventilation. D'autres applications pourraient se trouver dans le domaine du transport de liquide ou une substance granuleuse ou pulvérulente.

Dans toutes ces applications, les ondulations de la paroi du tube apportent essentiellement deux inconvénients. D'une part, des variations de la vitesse de transport avec laquelle un gaz ou une autre substance circule dans ce tube peuvent être à l'origine de vibrations ou de résonance du tube entraînant la génération d'un bruit ou la détérioration du tube ou au moins la perte de l'étanchéité du tube.

D'autre part, les tubes à parois ondulées présentent une section variable au fluide qui est transporté par ces tubes. Alors que, on obtient un flux optimal, lorsque la section est au moins approximativement constante.

Une des solutions possibles consiste au dédoublement de la largeur de la bande profilée par rajout d'une partie sensiblement plane. Cette partie sensiblement plane constitue, après enroulement de la bande profilée, la surface interne du tube et recouvre ses ondulations.

Des tubes de ce genre ont l'inconvénient d'être moins flexibles.

Dans certaines applications, un tube étanche est nécessaire ou, au moins, préférable.

Le but de l'invention est de remédier aux inconvénients et notamment de proposer un tube flexible et étanche dont la flexibilité est améliorée et qui est simple à fabriquer.

L'invention a pour objet un tube flexible et étanche formé par enroulement en hélice d'une bande profilée formée dans un matériau d'épaisseur approximativement constante, autour d'un axe longitudinal. Les bords de la bande profilée sont fixés d'une spire à l'autre et la bande profilée comprend une première aile ondulée et une deuxième aile approximativement plane, ladite deuxième aile recouvrant, après enroulement, la première aile à l'intérieur du tube.

Conformément à l'invention, le tube flexible et étanche est caractérisé en ce que la bande profilée comporte une troisième aile approximativement plane située entre la première et la deuxième ailes. La troisième aile est reliée à la deuxième aile par un épaulement formé tel que la troisième aile forme, après enroulement, une hélice de diamètre plus grand que celui de la deuxième aile.

Cette disposition permet de réaliser des tubes flexibles et étanches de divers diamètres avec la même bande profilée. Seule la courbure de cette bande profilée définit le diamètre.

Dans ce qui suit, le tube flexible et étanche sera décrit comme étant formé par enroulement en hélice d'une seule bande profilée. Il est, cependant, bien entendu que le tube flexible et étanche peut également être formé par enroulement en hélice de deux ou plusieurs bandes profilées sans sortir du cadre de la présente invention. Le choix du nombre de bandes profilées à enrouler dépend essentiellement de la pente que doivent avoir les spires par rapport à l'axe longitudinal du tube. En conséquence, le choix du nombre de bandes profilées à enrouler dépend aussi du diamètre du tube fini.

Cette disposition permet de donner à la deuxième aile, dans la direction axiale du tube, une étendue plus grande que celle de la première aile dans la même direction, tout en maintenant constant le diamètre intérieur du tube. On obtient ainsi un recouvrement complet et étanche de la première aile par un chevauchement au moins partiel de la deuxième aile avec la troisième aile.

L'invention concerne également les caractéristiques ci-après, considérées isolément ou selon toutes leurs combinaisons techniquement possibles:
- La bande profilée est fixée, d'une spire à l'autre, par l'extrémité libre de la première aile sur la deuxième aile.
   Cette disposition permet un éloignement des premières ailes correspondantes de deux spires successives. Il en découle une plus grande flexibilité du tube.
- La différence entre le diamètre que présente l'hélice formée, après enroulement, par la deuxième aile et le diamètre minimum que présente, après enroulement, celle formée par la première aile, est approximativement égale à l'épaisseur de la bande profilée.
   Cette disposition assure à la fois un bon appui de la première aile sur la deuxième et une mobilité suffisante mutuelle de ces deux ailes.
- Le diamètre que présente, après enroulement, l'hélice formée par la troisième aile, est approximativement égal au diamètre minimum que présente, après enroulement, celle formée par la première aile.
   Cette disposition permet un chevauchement de la deuxième aile avec la troisième aile avec une étanchéité optimale entre ces deux ailes.
- Un espace est ménagé entre l'extrémité libre de la deuxième aile d'une spire et l'épaulement de la spire voisine. Cet espace permet un jeu suffisant pour que, lors d'un cintrage du tube pour obtenir un coude, les spires se resserrent dans l'intérieur du coude alors que les ondulations permettent de donner de l'allongement à l'extérieur du coude. Cet espace évite que, lorsque le tube est tenu droit, la deuxième aile d'une spire butte sur la deuxième aile de la spire voisine. L'étendue de la deuxième aile d'une spire, dans la direction axiale du tube, doit être choisie en fonction de la flexibilité que l'on souhaite donner au tube. Plus particulièrement, cette étendue doit être choisie de façon que, lorsque le tube est courbé au maximum, la deuxième aile chevauche toujours avec la troisième aile de la spire voisine.
- La bande profilée est fixée, d'une spire à l'autre par soudure.
   Les tubes flexibles et étanches destinés à une utilisation comme conduit de fumée ou de gaz d'échappement sont, de manière générale, en métal. La méthode de fixation préférée est alors la soudure.
   Il est cependant concevable, et ce aussi bien pour les tubes en métal que pour les tubes en matière synthétique, que l'assemblage soit effectué par collage, agrafage, encliquetage ou tout autre procédé d'assemblage approprié.
   Les dispositions suivantes concernent des modes de réalisation différents du tube flexible et étanche de l'invention. Le choix de l'une ou de l'autre de ces dispositions, c'est-à-dire le choix du profil précis de la première aile de la bande profilée, ainsi que les dimensions précises des ondulations sont essentiellement fonction de l'utilisation du tube et de la flexibilité ou courbure que l'on souhaite lui conférer:
- La première aile ondulée comporte trois ondulations sensiblement de même forme et réparties régulièrement sur la première aile dans la direction axiale du tube.
- La première aile ondulée comporte deux ondulations sensiblement de même forme et espacées l'une de l'autre dans la direction de l'axe longitudinale du tube.
- La première aile ondulée comporte deux ondulations de même forme, entre lesquelles est disposée une troisième ondulation d'une étendue plus grande, dans la direction axiale du tube, que celle des deux ondulations de même forme.
- La première aile ondulée comporte une seule ondulation; celle-ci s'étend, dans la direction axiale du tube, sur au moins une partie de la première aile dans la direction de l'axe longitudinale du tube.

D'autres caractéristiques et avantages de l'invention ressortiront à la lecture d'un exemple de réalisation fait en référence aux dessins. Dans ces dessins, les figures montrent:
Figure 1 un tube flexible et étanche dans un mode de réalisation avantageux de l'invention;

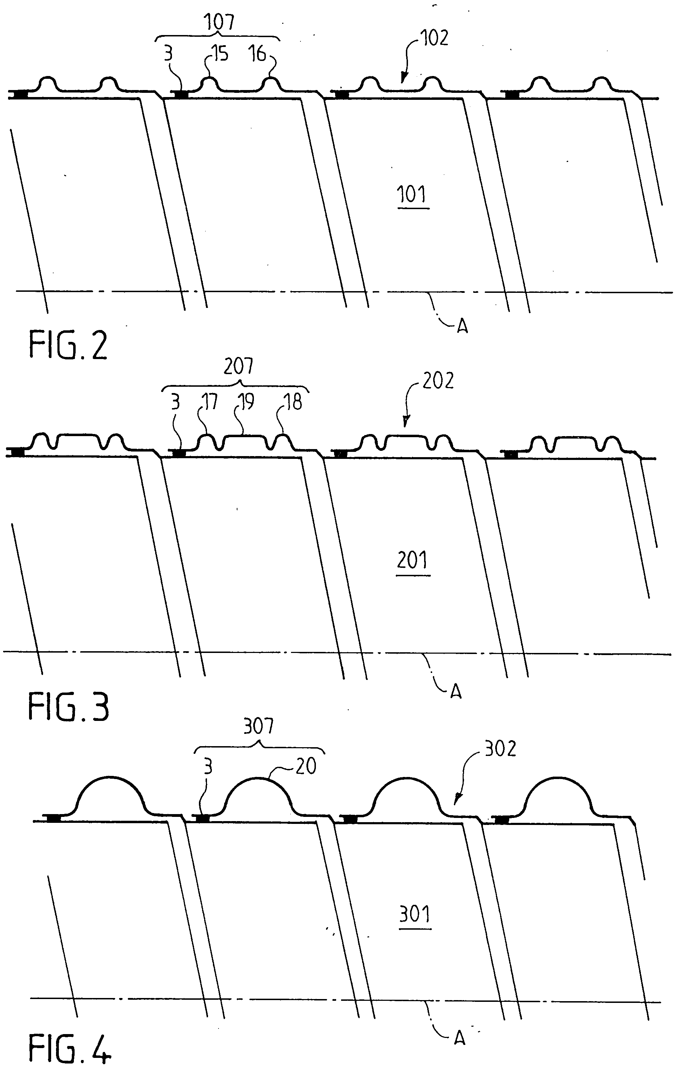

Figure 2 une première variante du tube représenté sur la Figure 1;
Figure 3 une deuxième variante du tube représenté sur la Figure 1; et
Figure 4 une troisième variante du tube représenté sur la Figure 1.

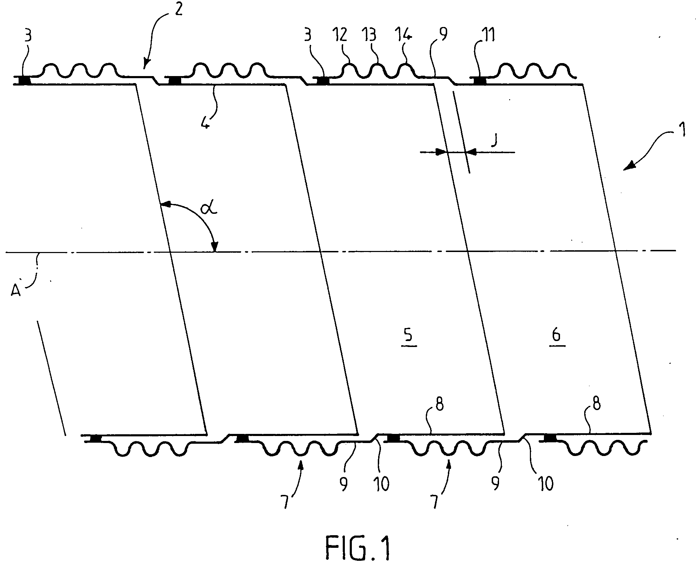

Le tube flexible et étanche 1 est formé par enroulement en hélice d'une bande profilée 2 sous un angle d'enroulement α autour d'un axe longitudinal A. L'angle d'enroulement α désigne l'orientation par rapport à l'axe longitudinal A, dans laquelle la bande profilée 2 est amenée lors de l'enroulement de celle-ci. La bande profilée 2 est formée dans un matériau d'épaisseur approximativement constante et présente un premier bord 3 et un deuxième bord 4. De l'enroulement en hélice autour d'un axe longitudinal A, il résulte un tube 1 constitué par des spires successives dont chacune se chevauche partiellement avec la suivante. Sur la Figure 1, une telle paire de spires est référencée en 5 et 6.

La bande profilée 2 comprend une première aile 7 ondulée se terminant sur le premier bord 3, une deuxième aile 8 approximativement plane se terminant sur le deuxième bord 4 ainsi qu'une troisième aile 9 approximativement plane située entre la première aile 7 et la deuxième aile 8. La troisième aile 9 est reliée à la deuxième aile 8 par un épaulement 10 ou décrochement. Ainsi, la troisième aile 9 présente pour le tube fini, c'est-à-dire après enroulement de la bande 2, un diamètre plus grand que celui que présente la deuxième aile 8.

Le choix de l'angle d'enroulement α ainsi que la largeur correspondante de chacune des trois ailes 7, 8 et 9 dépend principalement du diamètre intérieur et de la flexibilité que doit avoir le tube fini.

L'épaulement, référencé en 10 entre la deuxième aile 8 et la troisième aile 9 a une hauteur ou amplitude approximativement égale à l'épaisseur de la bande profilée 2. Le diamètre que présente, après enroulement, la troisième aile 9 correspond sensiblement au diamètre minimum que présente, après enroulement, la première aile 7. En conséquence, la différence entre le diamètre que présente, après enroulement, la deuxième aile 8 et le diamètre minimum que présente, après enroulement, la première aile ondulée 7 est approximativement égal au double de l'épaisseur de la bande profilée 2. Cette disposition assure que, dans le tube fini, la deuxième aile 8 est en appui, à l'intérieur du tube 1, contre la première aile 7 et la troisième aile 9.

La bande profilée 6 a une épaisseur approximativement uniforme. Elle peut être réalisée en différents matériaux. Par extrusion, il est possible de lui donner directement son profil définitif. Une bande métallique peut être obtenue par déformation plastique d'une bande initialement plane.

Pour obtenir l'étanchéité souhaitée du tube 1, un cordon de soudure 11 est posé entre l'extrémité libre de la première aile 7 de la spire 6 et la deuxième aile 8 de la spire 5.

Les largeurs correspondantes des trois ailes 7, 8 et 9 sont choisies de manière telle que la deuxième aile 8 recouvre entièrement la première aile 7 de la spire voisine et une partie de la troisième aile 9 de la spire voisine, et qu'il reste, en même temps, un espace J entre l'extrémité libre 4 de la première aile 8 et l'épaulement 10 de la spire voisine 6.

Selon le mode de réalisation représenté sur la Figure 1, la première aile 7 de la bande profilée 2 comporte trois ondulations 12, 13 et 14. Ces trois ondulations ont sensiblement la même forme et sont réparties de manière régulière dans la direction axiale du tube 1, c'est-à-dire sur la largeur entière de la première aile 7. L'ondulation 12 se termine sur l'extrémité libre 3 de la première aile 7 et l'ondulation 14 est reliée à la troisième aile 9.

Dans une première variante du mode de réalisation de l'invention décrit jusqu'ici, un tube flexible et étanche 101 est formé d'une bande profilée 102 comportant trois ailes dont la première est référencée en 107. La première aile 107 comporte deux ondulations 15 et 16 qui ont sensiblement la même forme et qui sont espacées l'une de l'autre dans la direction de l'axe longitudinale A du tube 101.

Les autres caractéristiques du tube 101 correspondent à celles du tube 1.

Dans une deuxième variante du tube de l'invention, un tube flexible et étanche 201 est formé par enroulement en hélice d'une bande profilée 202. La bande profilée 202 diffère de la bande profilée 2 du tube 1 par le fait que sa première aile, référencée en 207, comporte deux ondulations 17 et 18 de même forme ainsi qu'une troisième ondulation 19 d'une plus grande étendue dans la direction axiale A du tube 201. La troisième ondulation 19 est disposée entre les deux ondulations 17 et 18.

Dans une troisième variante du tube selon l'invention, un tube flexible et étanche 301 est formé par enroulement en hélice d'une bande profilée 302 qui diffère de la bande profilée 2 du tube 1 par le fait que sa première aile, référencée en 307, comporte une seule ondulation 20. Cette ondulation 20 s'étend pratiquement sur la largeur entière de la première aile 307.

Le choix de l'une ou de l'autre des variantes de la première aile de la bande profilée est fait selon la marge de coulissement ou la flexibilité du tube que l'on souhaite obtenir et selon l'élasticité ou l'effet de ressort de la bande profilée.

La dimension de l'espace J varie en fonction du choix de la variante de la première aile.

Les signes de référence insérés après les caractéristiques techniques mentionnées dans les revendications, ont pour seul but de faciliter la compréhension de ces dernières, et n'en limitent aucunement la portée.

## Revendications

1. Tube flexible et étanche (1) formé par enroulement en hélice d'une bande profilée (2) formée dans un matériau d'épaisseur approximativement constante, autour d'un axe longitudinal (A), au moins des bords (3, 4) de la bande profilée (2) étant fixé d'une spire à l'autre (5, 6) et la bande profilée comprenant une première aile (7) ondulée et une deuxième aile (8) approximativement plane, ladite deuxième aile (8) recouvrant, après enroulement, la première aile (7) à l'intérieur du tube (1), caractérisé en ce que la bande profilée (2) comporte une troisième aile (9) approximativement plane située entre la première (7) et la deuxième ailes (8) et reliée à la deuxième aile (8) par un épaulement (10) formé tel que la troisième aile (9) forme, après enroulement, une hélice de diamètre plus grand que celui de la deuxième aile (8).

2. Tube selon la revendication 1, caractérisé en ce que la bande profilée (2) est fixée, d'une spire (6) à l'autre (5), par l'extrémité libre de la première aile (7) sur la deuxième aile (8).

3. Tube selon la revendication 1 ou 2, caractérisé en ce que la différence entre le diamètre de l'hélice formée, après enroulement, par la deuxième aile (8), et le diamètre minimum de l'hélice formée, après enroulement, par la première aile (7), est approximativement égal au double de l'épaisseur de la bande profilée (2).

4. Tube selon l'une quelconque des revendications 1 à 3, caractérisé en ce que le diamètre de l'hélice formée, après enroulement, par la troisième aile (9), est approximativement égal au diamètre minimum que présente, après enroulement, l'hélice formée par première aile (7).

5. Tube selon l'une quelconque des revendications 1 à 4, caractérisé en ce qu'un espace (J) est ménagé entre l'extrémité libre (4) de la deuxième aile (8) d'une spire (5) et l'épaulement de la spire voisine (6).

6. Tube selon l'une quelconque des revendications 1 à 5, caractérisé en ce que la bande profilée (2) est fixée, d'une spire (5) à l'autre (6), par soudure.

7. Tube selon l'une quelconque des revendications 1 à 5, caractérisé en ce que la bande profilée est fixée, d'une spire à l'autre, par agrafage.

8. Tube selon l'une quelconque des revendications 1 à 7, caractérisé en ce que la première aile (7) ondulée comporte trois ondulations (12, 13, 14) sensiblement de même forme et réparties de manière régulière sur la première aile (7) dans la direction axiale (A) du tube (1).

9. Tube selon l'une quelconque des revendications 1 à 7, caractérisé en ce que la première aile ondulée (107) comporte deux ondulations (15, 16) sensiblement de même forme et espacées l'une de l'autre dans la direction de l'axe longitudinale (A) du tube 101).

10. Tube selon l'une quelconque des revendications 1 à 7, caractérisé en ce que la première aile (207) ondulée comporte deux ondulations (17, 18) de même forme, entre lesquelles est disposée une troisième ondulation (19) d'une étendue plus grande, dans la direction axiale (A) du tube (201), que celle des deux ondulations (17, 18) de même forme.

11. Tube selon l'une quelconque des revendications 1 à 7, caractérisé en ce que la première aile (307) ondulée comporte une seule ondulation s'étendant sur au moins une partie de l'étendue de la première aile dans la direction de l'axe longitudinale du tube.
